# EUROPEAN PATENT SPECIFICATION

(11) **EP 1 462 198 B1**
(45) Date of publication and mention of the grant of the patent: **24.10.2007**
(21) Application number: 04014071.7
(22) Date of filing: 30.08.2001
(51) Int. Cl.: B23B 51/04, B23B 31/107, B28D 1/04

(54) **Quick change mandrel assembly for hole saw and drill bit**
Schnellspannspindeleinheit für Lochsäge und Bohrer
Mandrin à serrage rapide pour scie à trous et foret

(30) Priority: 01.09.2000 US 230526 P
(43) Date of publication of application: 29.09.2004
(62) Divisional of application: 01203274.4
(73) Proprietor: Credo Technology Corporation, Wilmington, New Castle County, Delaware 19801 (US)
(72) Inventor: Nuss, Bart, Fisherville KY 40023 (US); Phillips, Gregory A., La Grange KY 40031 (US); Hall, Richard L., Lincolnton NC 28092 (US); Ward, Kevin M., Louisville KY 40291 (US)
(74) Representative: Lachenmeir, Stefan

(56) References cited:
- US-A- 3 251 605
- US-A- 5 246 317

## Description

### Background of the Invention

The present invention relates generally to a mandrel assembly adapted to attach a hole saw and a pilot drill bit to an electric drill.

Numerous mandrel assemblies have heretofore been designed which are adapted to attach a hole saw and a pilot drill bit to an electric drill. However, some of these existing mandrel assemblies tend to be somewhat difficult to use by an operator. For example, attachment and release of the drill bit and the hole saw from such mandrel assemblies tend to be difficult to achieve by the operator. In addition, other of these mandrel assemblies are complicated in construction thereby increasing their manufacturing cost.

US 5246317 shows a mandrel assembly for use with a hole saw and a drill bit, comprising: a body having a shank portion configured to be received in a chuck of a drill, and an adapter receiving portion that includes a detent hole extending through a wall thereof and further that defines an adapter receiving cavity, an adapter having a first portion configured to be received within said adapter receiving cavity, said first portion having a detent groove defined therein, and a second portion having a first coupling configured to releasably couple to a second coupling of said hole saw; and a detent located within said detent hole of said body and configured to be received within said detent groove of said adapter.

What is needed therefore is a mandrel assembly adapted to attach a hole saw and a pilot drill bit to an electric drill which overcomes one or more drawbacks of the previously designed mandrel assemblies.

### Summary of the invention

In accordance with one embodiment of the present invention, there is provided a mandrel assembly for use with a hole saw and a drill bit. The mandrel assembly includes a body having a shank portion and an adapter receiving portion. The adapter receiving portion defines an adapter receiving cavity and includes a first wall having a first detent hole extending therethrough. The mandrel assembly further includes a bit coupler secured to the body. The bit coupler is located within the adapter receiving cavity and defines a drill bit receiving portion. The drill bit receiving portion includes a bit receiving cavity and a second wall having a second detent hole extending therethrough. The mandrel assembly also includes an adapter configured to be received within the adapter receiving cavity. The adapter has an externally threaded portion configured to meshingly engage with a set of internal threads of the hole saw, the adapter further has a first detent groove defined in an outer surface thereof. Moreover, the mandrel assembly includes a first ball detent located within the first detent hole of the body and is configured to be received within the first detent groove of the adapter. The mandrel assembly additionally includes a second ball detent located within the second detent hole of the bit coupler and is configured to be received within a second detent groove of the drill bit.

Pursuant to another embodiment of the present invention, there is provided a cutting assembly. The cutting assembly includes a hole saw having a set of internal threads. The cutting assembly further includes a body having a shank portion and an adapter receiving portion, the adapter receiving portion defining an adapter receiving cavity and including a first wall having a first detent hole extending therethrough. The cutting assembly additionally includes a bit coupler located within the adapter receiving cavity and defining a drill bit receiving portion, the drill bit receiving portion including a bit receiving cavity and a second wall having a second detent hole extending therethrough. Moreover, the cutting assembly includes an adapter configured to be received within the adapter receiving cavity, the adapter having external threads which engage internal threads of the hole saw, the adapter further having a first detent groove defined therein. The cutting assembly yet further includes a first ball detent located within the first detent hole of the body and is configured to be received within the first detent groove of the adapter. Also, the cutting assembly includes a drill bit configured to be received within the drill bit receiving portion of the bit coupler, the drill bit having a second detent groove defined therein. The cutting assembly moreover includes a second ball detent located within the second detent hole of the bit coupler and is configured to be received within the second detent groove of the drill bit.

According to still another embodiment of the present invention, there is provided a mandrel assembly for use with a hole saw and a drill bit. The mandrel assembly includes a body having (i) a shank portion configured to be received in a chuck of a drill, and (ii) an adapter receiving portion which includes a detent hole extending through a wall thereof and further that defines an adapter receiving cavity. The mandrel assembly further includes a bit coupler secured to the body, the bit coupler being located within the adapter receiving cavity and defining a drill bit receiving portion. The mandrel assembly additionally includes an adapter configured to be received within the adapter receiving cavity, the adapter having a first coupling portion configured to cooperate with a second coupling portion of the hole saw, the adapter further having a detent groove defined therein. Also, the mandrel assembly includes a detent located within the detent hole of the body and configured to be received within the detent groove of the adapter.

It is therefore an object of the present invention to provide a new and useful mandrel assembly.

It is another object of the present invention to provide an improved mandrel assembly.

It is yet another object of the present invention to provide a mandrel assembly which facilitates quick attachment and release of the drill bit and the hole saw.

It is still another object of the present invention to provide a mandrel assembly which is relatively simple in construction.

Other objects and benefits of the present invention can be discerned from the following description and accompanying drawings.

### Brief Description of the Drawings

Fig. 1 is a side elevational view of a first embodiment of a mandrel assembly that incorporates the features of the present invention therein;
Fig. 2 is a disassembled side elevational view of the mandrel assembly of Fig. 1;
Fig. 3 is a sectional view of the mandrel assembly of Fig. 1;
Fig. 4 is a perspective view of the body of the mandrel assembly of Fig. 1;
Fig. 5 is a side elevational view of the body of Fig. 4;
Fig. 6 is a cross sectional view of the body of Fig. 4;
Fig. 7 is a front elevational view of the body of Fig. 4;
Fig. 8 is a side elevational view of the collar of the mandrel assembly of Fig. 1;
Fig. 9 is a cross sectional view of the collar of the Fig. 8;
Fig. 10 is a front elevational view of the annular sleeve of the mandrel assembly of Fig. 1;
Fig. 11 is a side elevational view of the annular sleeve of Fig. 10;
Fig. 12 is a front elevational view of the ring-shaped platform of the mandrel assembly of Figs. 1 and 28;
Fig. 13 is a cross sectional view of the ring-shaped platform of the Fig. 12;
Fig. 14 is a front elevational view of the retaining band of the mandrel assembly of Figs. 1 and 28;
Fig. 15 is a first side elevational view of the retaining band of Fig. 14;
Fig. 16 is a perspective view of the retaining band of Fig. 14;
Fig. 17 a second side elevational view of the retaining band of Fig. 14;
Fig. 18 is a cross sectional view of the bit coupler of the mandrel assembly of Figs. 1 and 28;
Fig. 19 is a perspective view of the bit coupler of Fig. 18;
Fig. 20 is a side elevational view of the bit coupler of Fig. 18;
Fig. 21 is a front elevational view of the bit coupler of Fig. 18;
Fig. 22 is a side elevational view of the adapter of the mandrel assembly of Figs. 1 and 28;
Fig. 23 is a cross sectional view of the adapter of Fig. 22;
Fig. 24 is a rear elevational view of the adapter of Fig. 22;
Fig. 25 is a perspective view of a hole saw which is usable with the mandrel assembly of Figs. 1 and 28;
Fig. 26 is a side elevational view of a drill bit that is usable with the mandrel assembly of Figs. 1 and 28;
Fig. 27 is an end elevational view of the pilot drill bit of Fig. 26;
Fig. 28 is a sectional view of a second embodiment of a mandrel assembly that incorporates the features of the present invention therein;
Fig. 29 is a perspective view of the mandrel assembly of Fig. 28;
Fig. 30 is a cross sectional view of the body of the mandrel assembly of Fig. 28;
Fig. 31 is a front elevational view of the body of Fig. 30;
Fig. 32 is a side elevational view of the body of Fig. 30;
Fig. 33 is a side elevational view of the collar of the mandrel assembly of Fig. 28;
Fig. 34 is a cross sectional view of the collar of the Fig. 33;
Fig. 35 is a front elevational view of the annular sleeve of the mandrel assembly of Fig. 28; and
Fig. 36 is a side elevational view of the annular sleeve of Fig. 35.

### Description of the Preferred Embodiments

While the invention is susceptible to various modifications and alternative forms, specific embodiments thereof has been shown by way of example in the drawings and will herein be described in detail. It should be understood, however, that there is no intent to limit the invention to the particular forms disclosed, but on the contrary, the intention is to cover all modifications, equivalents, and alternatives falling within the spirit and scope of the invention as defined by the appended claims.

### First Embodiment

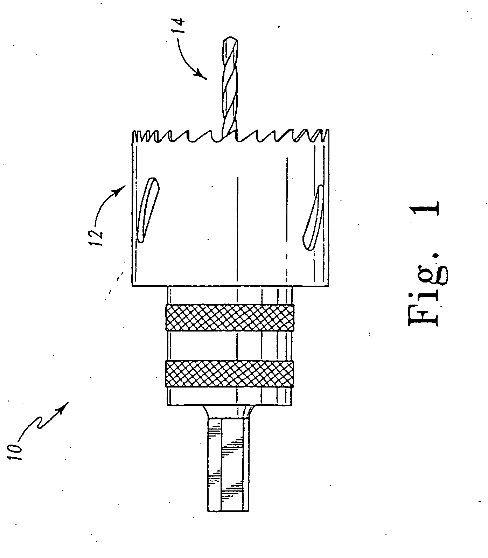

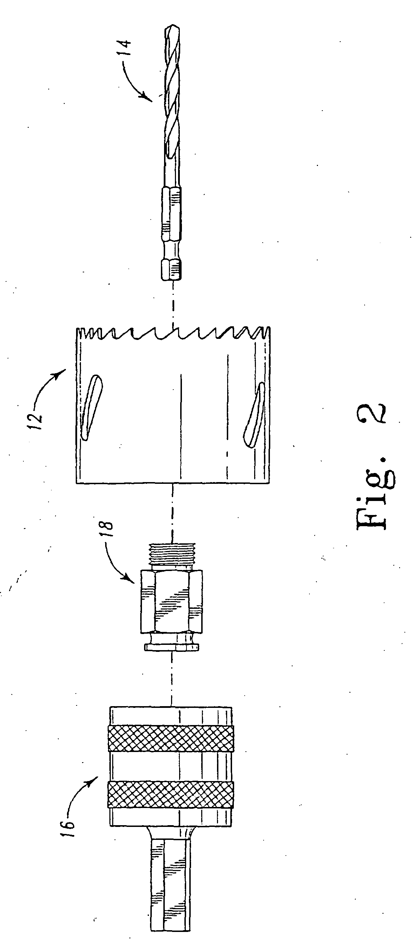

Referring now to FIGS. 1-2, there is shown a first embodiment of a mandrel assembly 10 which is adapted to attach a hole saw 12 and a pilot drill bit 14 to an electric drill (not shown). The mandrel assembly 10 includes two main components, namely, a base mechanism 16 and an adapter 18.

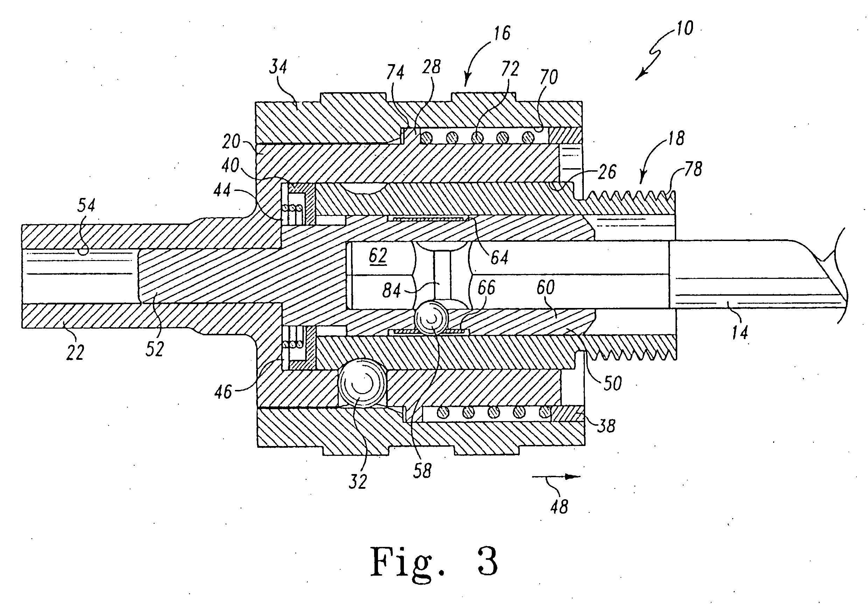

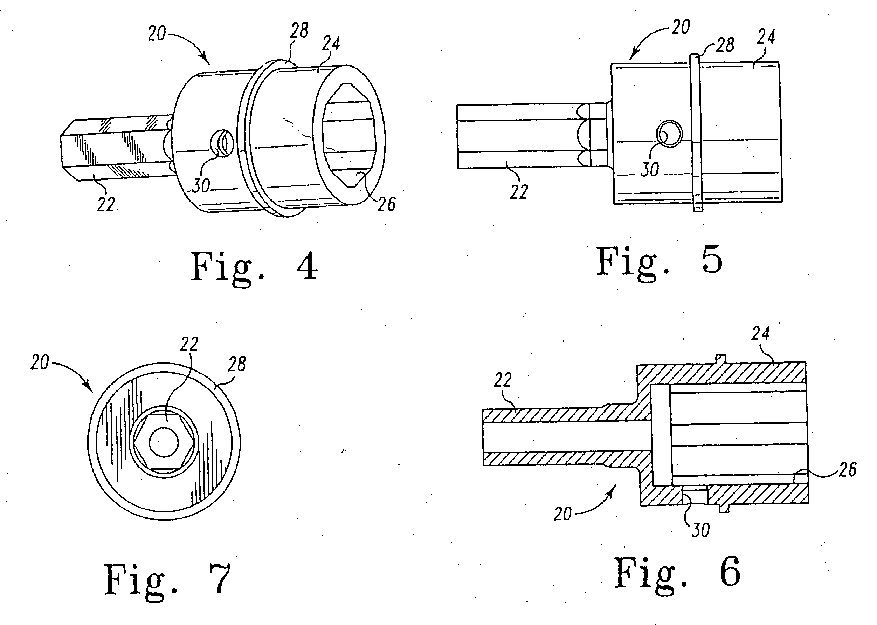

As shown in FIGS 3-7, the base mechanism 16 includes a body 20 having a hexagonally-shaped shank 22 which is configured to be received within a chuck of the electric drill (not shown). The body 20 includes a cylindrical portion 24 which defines a cavity 26. The body 20 is formed to include a shoulder 28 which extends outwardly from the cylindrical portion 24. The cylindrical portion 24 has defined therein an opening 30 adapted to receive a ball 32 as shown in FIG. 3.

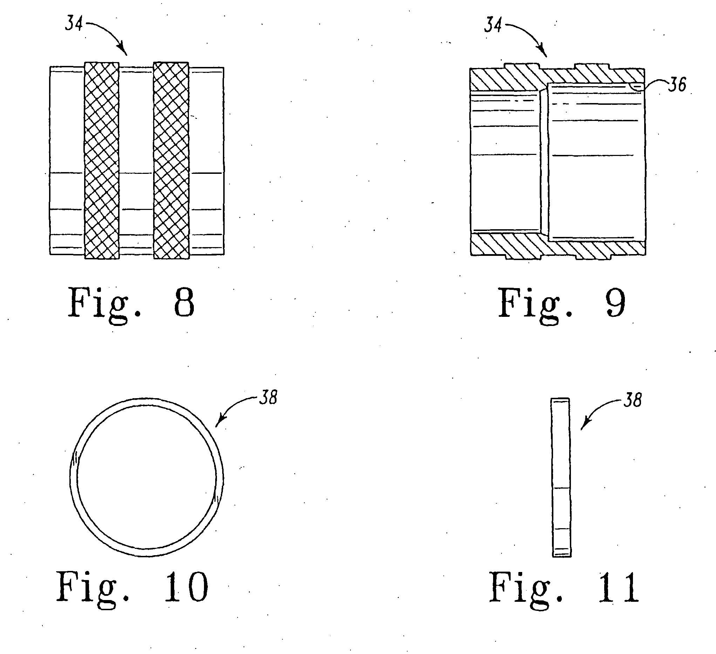

The base mechanism 16 further includes a collar 34 which is movable in relation to the body 20. The collar 34 is positioned around the cylindrical portion 24 of the body 20 as shown in FIG. 3. The collar 34 defines a passageway 36 extending therethrough as shown in Fig. 9. An annular sleeve 38 is attached to the collar 34 and positioned within the passageway 36.

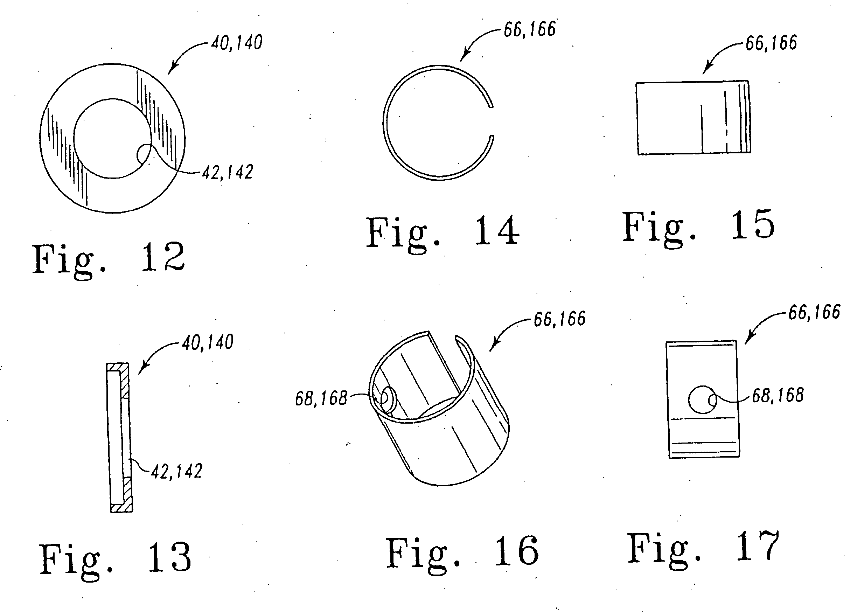

Additionally, the base mechanism 16 includes a ring-shaped platform 40 having a hole 42 defined therein (see FIGS. 12-13). The platform 40 is located in the cavity 26 of the body 20 as shown in FIG. 3. A spring 44 is interposed between the platform 40 and a ledge 46 of the body 20. The spring 44 functions to urge the platform 40 in the direction of arrow 48.

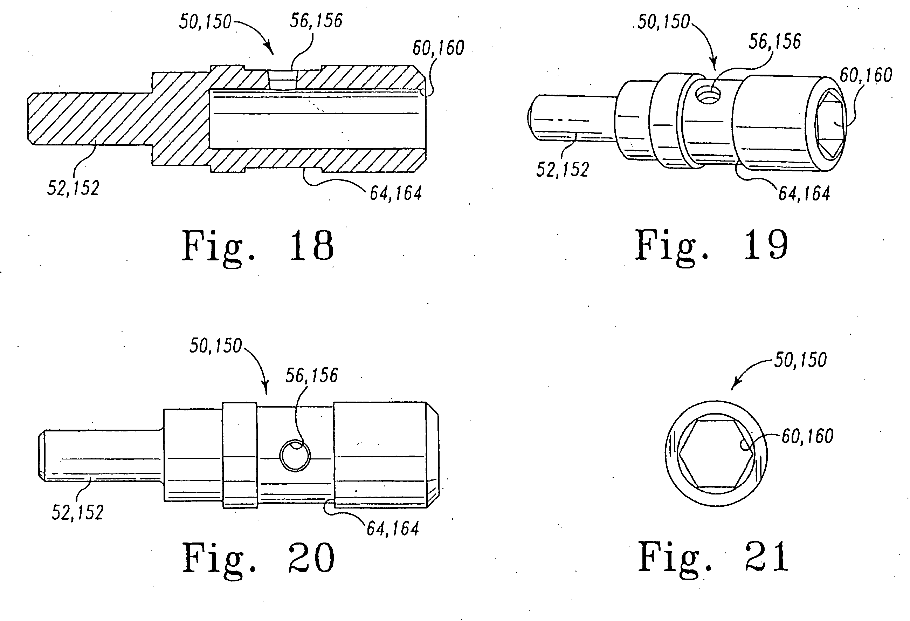

The base mechanism 16 also includes a bit coupler 50 positioned within the cavity 26 as shown in FIG. 3 (see also FIGS 18-21). The bit coupler 50 has a stem portion 52 which is received into a recess 54 defined within the hex shank 22. The bit coupler 50 has defined therein an opening 56 adapted to receive a ball 58 as shown in FIG. 3. The bit coupler 50 further defines a cavity 60 adapted to receive a hex end 62 of the drill bit 14. The bit coupler 50 further includes an external recess 64 which is defined in an outer surface of the bit coupler 50. A retaining band 66 is positioned within the external recess as shown in FIG. 3 (see also FIGS. 14-17). The retaining band 66 has a hole 68 defined therein which partially receives the ball 58 therein as shown in FIG. 3.

When the base mechanism 16 is assembled, a spring space 70 is defined between the collar 34 and the body 20. A spring 72 is positioned in the spring space 70 and is contained therein by contact with the shoulder 28 and the annular sleeve 38. The spring 72 functions to urge the collar 34 in the direction of arrow 48. Movement of the collar 34 relative to the body 20 is limited due to an interior lip 74 of the collar 34 contacting the shoulder 28 of the body 20.

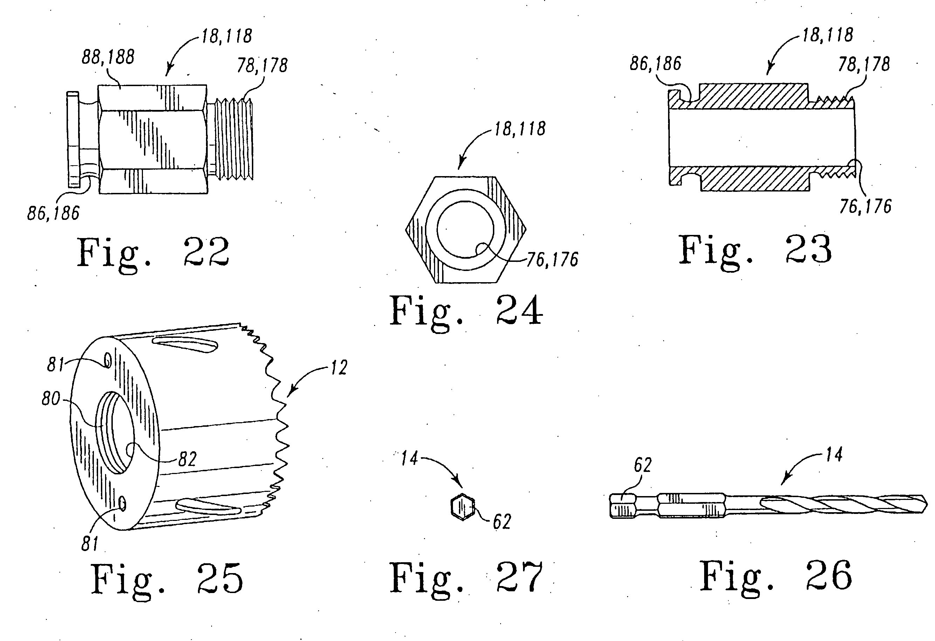

FIG. 3 shows the adapter 18 coupled to the base mechanism 16. The adapter 18 has a passageway 76 extending therethrough (see also FIGS. 23 and 24). A set of external threads 78 are provided on one end portion of the adapter 18 (see FIGS. 3 and 22-23). The external threads 78 are configured to cooperate with a set of internal threads 80 defined in an opening 82 of the hole saw 12 (see FIG. 25) so as to attach the hole saw 12 to the mandrel assembly 10. The exterior surface of the adapter 18 possesses a hexagonal shape while the cavity 26 defined by the interior surface of the body 20 possesses a complementary hexagonal shape. As a result, rotation of the body 20 causes rotational force to be transmitted to the adapter 18. In turn, rotation of the adapter 18 causes the hole saw 12 to rotate.

The drill bit 14 is maintained in the passageway 76 of the adapter 18 due to the cooperation of bit coupler 50 and the ball 58. In particular, a groove 84 defined in the hex end 62 of the drill bit 14 receives the ball 58 so as to lock the drill bit 14 in adapter 18 (and consequently in the mandrel assembly 10) as shown in FIG. 3.

The adapter 18 has a groove 86 defined in a sidewall 88 thereof. The adapter 18 is maintained in the cavity 26 of the body 20 due to the cooperation of the groove 86 and the ball 32. In particular, the groove 86 receives the ball 32 so as to lock the adapter 18 in the mandrel assembly 10 as shown in FIG. 3.

It should be appreciated from FIG. 1 that during use of the mandrel assembly 10, the hex shank 22 is secured within the chuck of the electric drill (not shown). Further, the drill bit 14 and the hole saw 12 are attached to the mandrel assembly 10 as described above.

### Second Embodiment

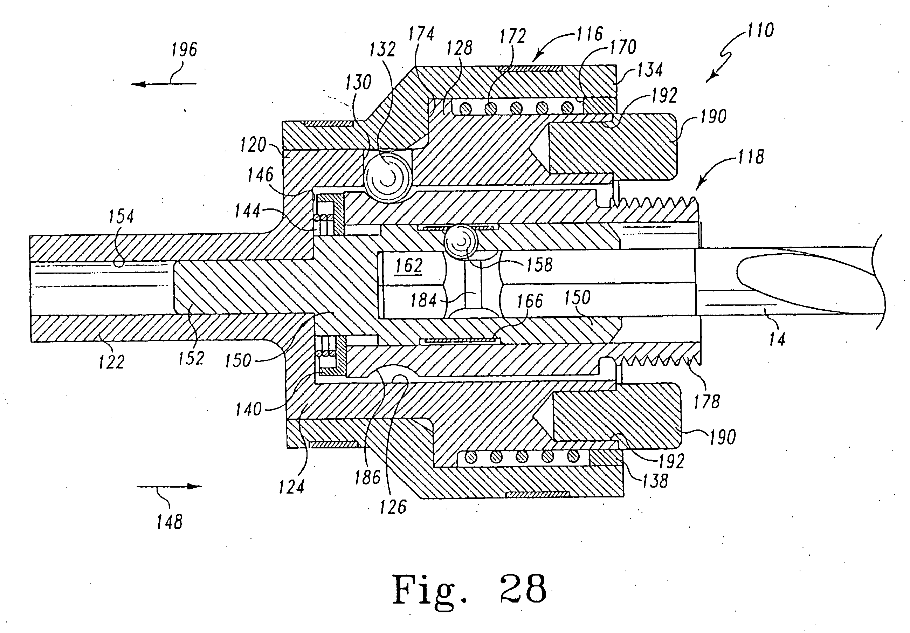

Referring now to FIGS. 28-29, there is shown a second embodiment of a mandrel assembly 110 which is adapted to attach the hole saw 12 and the pilot drill bit 14 to an electric drill (not shown). The mandrel assembly 110 also includes two main components, namely, a base mechanism 116 and an adapter 118.

As shown in FIGS 28-32, the base mechanism 116 includes a body 120 having a hexagonally-shaped shank 122 which is configured to be received within a chuck of the electric drill (not shown). The body 120 includes a substantially cylindrical portion 124 which defines a cavity 126. The body 120 is formed to include a shoulder 128 which extends outwardly from the cylindrical portion 124. The cylindrical portion 124 has defined therein an opening 130 adapted to receive a ball 132 as shown in FIG. 28.

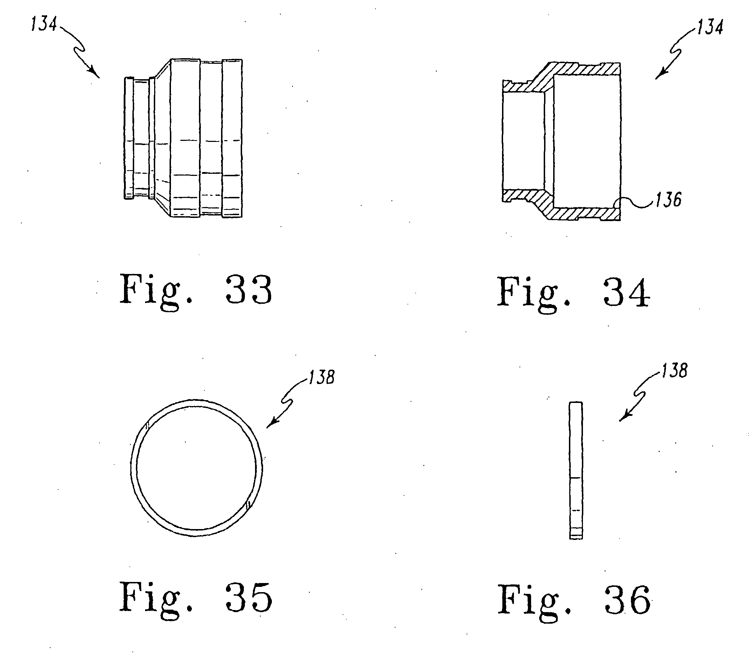

The base mechanism 116 further includes a collar 134 which is movable in relation to the body 120 (see FIGS. 28 and 33-34). The collar 134 is positioned around the cylindrical portion 124 of the body 120 as shown in FIG. 28. The collar 134 defines a passageway 136 extending therethrough. An annular sleeve 138 is attached to the collar 134 and positioned within the passageway 136.

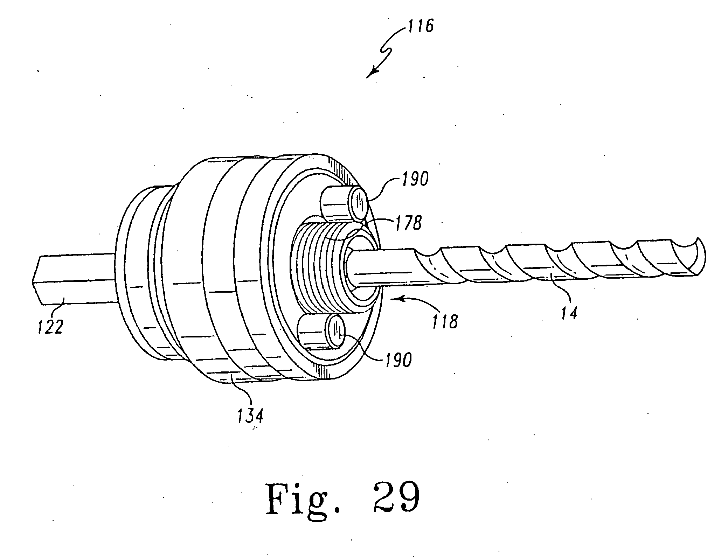

Additionally, the base mechanism 116 includes a ring-shaped platform 140 having a hole 142 defined therein (see FIGS 12-13). The platform 140 is located in the cavity 126 of the body 120 as shown in FIG. 29. A spring 144 is interposed between the platform 140 and a ledge 146 of the body 120. The spring 144 functions to urge the platform 140 in the direction of arrow 148.

The base mechanism 116 also includes a bit coupler 150 positioned within the cavity 126 as shown in FIG. 28 (see also FIGS 18-21). The bit coupler 150 has a stem portion 152 which is received into a recess 154 defined within the hex shank 122. The bit coupler 150 has defined therein an opening 156 adapted to receive a ball 158 as shown in FIG. 28. The bit coupler 150 further defines a cavity 160 adapted to receive a hex end 162 of the drill bit 14. The bit coupler 150 further includes an external recess 164 which is defined in an outer surface of the bit coupler 150. A retaining band 166 is positioned within the external recess as shown in FIG. 28 (see also FIGS. 14-17). The retaining band 166 has a hole 168 defined therein which partially receives the ball 158 therein as shown in FIG. 28.

When the base mechanism 116 is assembled, a spring space 170 is defined between the collar 134 and the body 120. A spring 172 is positioned in the spring space 170 and is contained therein by contact with the shoulder 128 and the annular sleeve 138. The spring 172 functions to urge the collar 134 in the direction of arrow 148. Movement of the collar 134 relative to the body 120 is limited due to an interior lip 174 of the collar 134 contacting the shoulder 128 of the body 120.

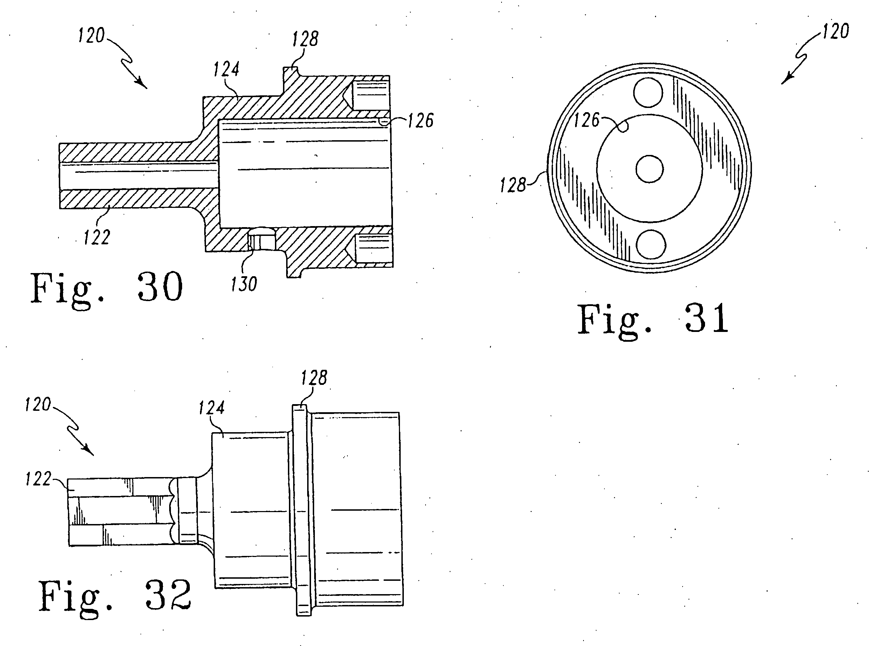

FIG. 28 shows the adapter 118 coupled to the base mechanism 116. The adapter 118 has a passageway 176 extending therethrough (see FIGS. 22-23). A set of external threads 178 are provided on one end portion of the adapter 118 (see FIGS. 28 and 22-23). The external threads 178 are configured to cooperate with a set of internal threads 80 defined in an opening 82 of the hole saw 12 (see FIG. 25) so as to attach the hole saw 12 to the mandrel assembly 110. The exterior surface of the adapter 118 possesses a hexagonal shape while the cavity 126 defined by the interior surface of the body 120 possesses a cylindrical shape as shown in Figs 30-31.

The drill bit 14 is maintained in the passageway 176 of the adapter 118 due to the cooperation of bit coupler 150 and the ball 158. In particular, a groove 184 defined in the hex end 162 of the drill bit 14 receives the ball 158 so as to lock the drill bit 14 in adapter 118 (and consequently in the mandrel assembly 110) as shown in FIG. 28.

The adapter 118 has a groove 186 defined in a sidewall 188 thereof. The adapter 118 is maintained in the cavity 126 of the body 120 due to the cooperation of the groove 186 and the ball 132. In particular, the groove 186 receives the ball 132 so as to lock the adapter 118 in the mandrel assembly 110 as shown in FIG. 28.

The mandrel assembly 110 further includes a pair of pins 190 which are respectively secured within a pair of apertures 192 defined in the body 120 as shown in FIG. 28. In order to attach the hole saw 12 to the mandrel assembly 110, initially, the adapter 118 is coupled to the hole saw 12 by meshingly engaging the external threads 178 of the adapter 110 with the internal threads 80 of the hole saw until the adapter 118 is secured to the hole saw 12. Then, the adapter 118 with the hole saw 12 attached thereto is advanced into the cavity 126 of the body 120. Simultaneously, the collar 134 is urged in the direction of arrow 196 against the spring bias of spring 172 thereby allowing ball 132 to move away as the adapter pushes against the platform 140. Once the groove 186 is aligned with the ball 132, a user may release the collar 134 thereby allowing it to move in the direction of arrow 148 due to the bias of spring 172. Once the adapter 118 with the hole saw 12 attached thereto is advanced into the cavity 126 of the body 120, the pair of pins 190 are respectively positioned within a pair of openings 81 defined in the hole saw (see Fig. 25). As a result, rotation of the body 120 causes rotational force to be transmitted to the pair of pins 190. In turn, rotation of the pair of pins 190 causes the hole saw 12 to rotate.

During use of the mandrel assembly 110, the hex shank 122 is secured within the chuck of the electric drill (not shown). Further, the drill bit 14 and the hole saw 12 are attached to the mandrel assembly 110 as described above.

It should be appreciated that in both embodiments the drill bit 14 may be removed from the bit coupler 50, 150 only if the adapter 18, 118 is not positioned in the cavity 26, 126 of the body 20, 120. Once the adapter 18, 118 is positioned within the cavity 26, 126, the drill bit 14 is locked in place because the inner wall of the adapter 18, 118 prevents the ball 58, 158 from disengaging the surface defined by the groove 84, 184 of the drill bit 14.

While the invention has been illustrated and described in detail in the drawings and foregoing description, the same is to be considered as illustrative and not restrictive in character, it being understood that only the preferred embodiments have been shown and described and that all changes and modifications that come within the spirit of the invention are desired to be protected.

There is a plurality of advantages of the present invention arising from the various features of the mandrel assembly described herein. It will be noted that alternative embodiments of the mandrel assembly of the present invention may not include all of the features described yet still benefit from at least some of the advantages of such features. Those of ordinary skill in the art may readily devise their own implementations of the mandrel assembly that incorporate one or more of the features of the present invention and fall within the spirit and scope of the present invention as defined by the appended claims.

## Claims

1. A mandrel assembly (10) for use with a hole saw (12) and a drill bit (14), comprising:
a body (20) having (i) a shank portion (22) configured to be received in a chuck of a drill, and (ii) an adapter receiving portion (24) that includes a detent hole (30) extending through a wall thereof and further that defines an adapter receiving cavity (26), said adapter receiving portion (24) having a shank-side end and a hole saw-side end, and said hole saw-side end defining an access opening to said adapter receiving cavity (26);
an adapter (18) having a first portion which defines a detent groove (86), said first portion and said detent groove (86) being configured to be received within said adapter receiving cavity (26) through said access opening, and (i) a second portion coupled to said hole saw (12); and
a detent (32) located within said detent hole (30) of said body (20) and configured to be received within said detent groove (86) of said adapter (18).

2. The mandrel assembly of claim 1, wherein said second portion of said adapter (18) has a first coupling (78) configured to releasably couple to a second coupling (80) of said hole saw (12).

3. The mandrel assembly of claim 2, wherein said first coupling (78) includes a first threaded segment (78) configured to threadingly engage a second threaded segment (80) of said hole saw (12).

4. The mandrel assembly of claim 3, wherein
said adapter (18) has a first end and a second end, and
said adapter (18) includes a passage (76) that extends from said first end to said second end.

5. The mandrel assembly of claim 4, wherein said passage (76) is configured to receive said drill bit (14) therein.

6. The mandrel assembly of claim 3, wherein said first threaded segment (78) is an externally threaded segment.

7. The mandrel assembly of claim 3, wherein:
said wall of said adapter receiving portion (24) of said body (20) includes an inner surface and an outer surface, and
said detent hole (30) extends from said inner surface to said outer surface.

8. The mandrel assembly of claim 3, further comprising a collar (34) positioned around said body (20), wherein:
said collar (34) is movable between a lock position and a release position,
said collar (34) is positioned to contact said detent (32) so as to maintain said detent (32) within said detent groove (86) of said adapter (18) when said collar (34) is positioned in said lock position; and
said collar (34) is positioned to allow said detent (32) to move out of said detent groove (86) of said adapter (18) when said collar (34) is positioned in said release position.

9. The mandrel assembly of claim 8, further comprising a spring (72) configured to bias said collar (34) into said lock position.

10. The mandrel assembly of claim 1, wherein said detent (32) is a ball detent.

11. The mandrel assembly of claim 1, wherein said first portion of said adapter (18) further has a polygonally-shaped exterior surface.

12. The mandrel assembly of claim 11, wherein said polygonally-shaped exterior surface is a hexagonally-shaped exterior surface.

13. The mandrel assembly of claim 11, wherein said adapter receiving portion (24) of said body (20) possesses a polygonally-shaped interior surface configured to mate with said polygonally-shaped exterior surface of said adapter (18).

14. The mandrel assembly of claim 13, wherein said polygonally-shaped interior surface of said adapter receiving portion (24) is a hexagonally-shaped interior surface.

15. The mandrel assembly of claim 11, wherein said detent groove (86) is spaced apart from said polygonally-shaped exterior surface.

16. The mandrel assembly of claim 15, wherein both said detent groove (86) and said polygonally-shaped exterior surface is located within said adapter receiving cavity (26) when said adapter (18) is coupled to said body (20).

17. The mandrel assembly of claim 2, wherein said first threaded segment (78) is located outside of said adapter receiving cavity (26) when said adapter (18) is coupled to said body (20).

## Patentansprüche

1. Spindelanordnung (10) zur Verwendung mit einer Lochsäge (12) und einem Bohrer (14), die Folgendes aufweist:
einen Körper (20) mit (i) einem Schaftabschnitt (22), der so konfiguriert ist, dass er in einem Spannfutter einer Bohrmaschine aufgenommen wird, und (ii) einem Adapteraufnahmeabschnitt (24), der ein durch eine Wand davon verlaufendes Arretierungsloch (30) enthält und weiterhin einen Adapteraufnahmehohlraum (26) definiert, wobei der Adapteraunahmeabsehnitt (24) ein schaftseitiges Ende und ein lochsägenseitiges Ende hat, das eine Zugangsöffnung zum Adapteraufnahmehohlraum (26) definiert,
einen Adapter (18) mit einem ersten Abschnitt, der eine Arretierungsnut (86) definiert, wobei der erste Abschnitt und die Arretierungsnut (86) so konfiguriert sind, dass sie durch die Zugangsöffnung im Adapteraufnahmehohlraum (26) aufgenommen werden, und (i) einem zweiten Abschnitt, der an die Lochsäge (12) gekoppelt ist, und
eine Arretierung (32), die im Arretierungsloch (30) des Körpers (20) angeordnet und so konfiguriert ist, dass sie in der Arretierungsnut (86) des Adapters (18) aufgenommen wird.

2. Spindelanordnung nach Anspruch 1, wobei der zweite Abschnitt des Adapters (18) eine erste Kupplung (78) hat, die dazu konfiguriert ist, lösbar an eine zweite Kupplung (80) der Lochsäge (12) zu koppeln.

3. Spindelanordnung nach Anspruch 2, wobei die erste Kupplung (78) ein erstes Gewindesegment (78) aufweist, das dazu konfiguriert ist, ein zweites Gewindesegment (80) der Lochsäge (12) gewindemäßig in Eingriff zu nehmen.

4. Spindelanordnung nach Anspruch 3, wobei der Adapter (18) ein erstes und ein zweites Ende hat und einen Durchgang (76) aufweist, der sich vom ersten Ende zum zweiten Ende erstreckt.

5. Spindelanordnung nach Anspruch 4, wobei der Durchgang (76) dazu konfiguriert ist, den Bohrer (14) darin aufzunehmen.

6. Spindelanordnung nach Anspruch 3, wobei es sich bei dem ersten Gewindesegment (78) um ein Außengewindesegment handelt.

7. Spindelanordnung nach Anspruch 3, wobei die Wand des Adapteraufhahmeabschnitts (24) des Körpers (20) eine Innenfläche und eine Außenfläche aufweist, und sich das Arretierungsloch (30) von der Innenfläche zur Außenfläche erstreckt.

8. Spindelanordnung nach Anspruch 3, ferner mit einem um den Körper (20) herum positionierten Bund (34), wobei
der Bund (34) zwischen einer Verriegelungsposition und einer Freigabeposition beweglich ist,
der Bund (34) so positioniert ist, dass er die Arretierung (32) kontaktiert, um die Arretierung (32) in der Arretierungsnut (86) des Adapters (18) zu halten, wenn der Bund (34) in der Verriegelungsposition positioniert ist, und
der Bund (34) so positioniert ist, dass er der Arretierung (32) gestattet, sich aus der Arretierungsnut (86) des Adapters (18) herauszubewegen, wenn der Bund (34) in der Freigabeposition positioniert ist.

9. Spindelanordnung nach Anspruch 8, ferner mit einer Feder (72), die so konfiguriert ist, dass sie den Bund (34) in die Verriegelungsposition vorspannt.

10. Spindelanordnung nach Anspruch 1, wobei es sich bei der Arretierung (32) um eine Kugelarretierung handelt.

11. Spindelanordnung nach Anspruch 1, wobei der erste Abschnitt des Adapters (18) ferner eine polygonförmige Außenfläche hat.

12. Spindelanordnung nach Anspruch 11, wobei es sich bei der polygonförmigen Außenfläche um eine hexagonförmige Außenfläche handelt.

13. Spindelanordnung nach Anspruch 11, wobei der Adapteraufnahmeabschnitt (24) des Körpers (20) eine polygonförmige Innenfläche besitzt, die dazu konfiguriert ist, mit der polygonförmigen Außenfläche des Adapters (18) zusammenzupassen

14. Spindelanordnung nach Anspruch 13, wobei es sich bei der polygonförmigen Innenfläche des Adapteraufnahmeabschnits (24) um eine hexagonförmige Innenfläche handelt.

15. Spindelanordnung nach Anspruch 11, wobei die Arretierungsnut (86) von der polygonförmigen Außenfläche beabstandet ist.

16. Spindelanordnung nach Anspruch 15, wobei sowohl die Arretierungsnut (86) und die polygonförmige Außenfläche im Adapteraufnahmehohlraum (26) angeordnet ist, wenn der Adapter (18) an den Körper (20) gekoppelt ist.

17. Spindelanordnung nach Anspruch 2, wobei das erste Gewindesegment (78) außerhalb des Adapteraufnahmehohlraums (26) angeordnet ist, wenn der Adapter (18) an den Körper (20) gekoppelt ist.

## Revendications

1. Ensemble de mandrin (10) destiné à être utilisé avec une scie à cloche (12) et un foret (14), comprenant :
un corps (20) comportant (i) une partie de tige (22) configurée pour être reçue dans un mandrin d'un foret, et (ii) une partie de réception d'adaptateur (24) qui comprend un trou de détente (30) traversant une paroi de celui-ci et qui définit en outre une cavité de réception (26), cette partie de réception d'adaptateur (24) ayant une extrémité située du côté de la tige et une extrémité située du côté de la scie à cloche, et l'extrémité située du côté de la scie à cloche définissant une ouverture d'accès à la cavité de réception (26) ;
un adaptateur (18) ayant une première partie qui définit une rainure de détente (86), cette première partie et cette rainure de détente (86) étant configurées pour être reçues dans la cavité de réception (26) d'adaptateur (26) à travers l'ouverture d'accès, et (i) une seconde partie couplée à la scie à cloche (12) ; et
une détente (32) placée à l'intérieur du trou de détente (30) du corps (20) et configurée pour être reçue dans la rainure de détente (86) de l'adaptateur (18).

2. Ensemble de mandrin selon la revendication 1,
dans lequel
la seconde partie de l'adaptateur (18) a un premier accouplement (78) configuré pour être couplé de manière libérable à un second accouplement (80) de la scie à cloche (12).

3. Ensemble de mandrin selon la revendication 2,
dans lequel
le premier accouplement (78) comprend un premier segment fileté (78) configuré pour s'engager par filetage avec un second segment fileté (80) de la scie à cloche (12).

4. Ensemble de mandrin selon la revendication 3,
dans lequel :
l'adaptateur (18) a une première extrémité et une seconde extrémité, et
l'adaptateur (18) comprend un passage (76) qui s'étend de la première extrémité vers la seconde extrémité.

5. Ensemble de mandrin selon la revendication 4,
dans lequel :
le passage (76) est configuré pour recevoir le foret (14).

6. Ensemble de mandrin selon la revendication 3,
dans lequel
le premier segment fileté (78) est fileté extérieurement.

7. Ensemble de mandrin selon la revendication 3,
danslequel:
la paroi de la partie de réception d'adaptateur (24) du corps (20) comprend une surface intérieure et une surface extérieure, et
le trou de détente (30) s'étend de la surface intérieure vers la surface extérieure.

8. Ensemble de mandrin selon la revendication 3,
comprenant en outre un collier (34) positionné autour du corps (20), dans lequel :
le collier (34) peut se déplacer entre une position de blocage et une position de déblocage,
le collier (34) est positionné pour être en contact avec la détente (32) de manière à maintenir cette détente (32) dans la rainure de détente (86) de l'adaptateur (18) lorsque le collier (34) est positionné dans la position de blocage ; et
le collier (34) est positionné pour permettre à la détente (32) de sortir de la rainure de détente (86) de l'adaptateur (18) lorsque le collier (34) est positionné dans la position de déblocage.

9. Ensemble de mandrin selon la revendication 8,
comprenant en outre
un ressort (72) configuré pour pousser le collier (34) et l'amener dans la position de blocage.

10. Ensemble de mandrin selon la revendication 1,
dans lequel
la détente (32) est une détente à bille.

11. Ensemble de mandrin selon la revendication 1,
dans lequel
la première partie de l'adaptateur (18) a en outre une surface extérieure en forme de polygone.

12. Ensemble de mandrin selon la revendication 11,
dans lequel
la surface extérieure en forme de polygone est hexagonale.

13. Ensemble de mandrin selon la revendication 11,
dans lequel
la partie de réception d'adaptateur (24) du corps (20) possède une surface intérieure en forme de polygone configurée pour s'accoupler avec la surface extérieure en forme de polygone de l'adaptateur (18).

14. Ensemble de mandrin selon la revendication 13,
dans lequel
la surface intérieure en forme de polygone de la partie de réception d'adaptateur (24) est de forme hexagonale.

15. Ensemble de mandrin selon la revendication 11,
danslequel
la rainure de détente (86) est espacée de la surface extérieure en forme de polygone,

16. Ensemble de mandrin selon la revendication 15,
dans lequel
la rainure de détente (86) et la surface extérieure en forme de polygone sont toutes deux placées à l'intérieur de la cavité de réception (26) d'adaptateur lorsque l'adaptateur (18) est couplé au corps (20).

17. Ensemble de mandrin selon la revendication 2,
dans lequel
le premier segment fileté (78) est placé à l'extérieur de la cavité de réception (26) d'adaptateur lorsque l'adaptateur (18) est couplé au corps (20).
